Europäisches Patentamt

European Patent Office

Office européen des brevets

(19)

(11) EP 0 857 301 B1

(12) **EUROPEAN PATENT SPECIFICATION**

(45) Date of publication and mention
of the grant of the patent:
**10.05.2000 Bulletin 2000/19**

(21) Application number: **96935576.7**

(22) Date of filing: **25.10.1996**

(51) Int Cl.[7]: **G01N 21/76**

(86) International application number:
**PCT/NL96/00417**

(87) International publication number:
**WO 97/15822 (01.05.1997 Gazette 1997/19)**

(54) **ETHENE METER AND METHOD FOR DETERMINING THE AMOUNT OF ETHENE IN A GAS**

ETHEN-BESTIMMUNGSGERÄT UND VERFAHREN ZUR MESSUNG DES ETHEN-GEHALTS IN EINEM GAS

APPAREIL DE MESURE DE L'ETHYLENE ET PROCEDE VISANT A DETERMINER LA QUANTITE D'ETHYLENE PRESENT DANS UN GAZ

(84) Designated Contracting States:
**BE DE DK ES FR GB IE IT NL SE**

(30) Priority: **27.10.1995 NL 1001520**

(43) Date of publication of application:
**12.08.1998 Bulletin 1998/33**

(73) Proprietor: **GASTEC N.V.**
**NL-7327 AC Apeldoorn (NL)**

(72) Inventors:
• **VILJEER, Johannes, Wilhelmus**
**NL-7361 GS Beekbergen (NL)**
• **VISSER, Johannes, Cornelis**
**NL-7322 PM Apeldoorn (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**EP-A- 0 209 295**      **EP-A- 0 312 826**
**WO-A-86/01296**      **US-A- 3 749 929**

• **REVIEW OF SCIENTIFIC INSTRUMENTS, vol. 53, no. 12, December 1982, NEW YORK US, pages 1899-1902, XP002005185 A.C. DELANY ET AL: "Modification of a commercial NOx detector for high sensitivity"**
• **ANALYTICAL CHEMISTRY, vol. 55, no. 11, September 1983, COLUMBUS US, pages 1660-1665, XP002005186 A.A. MEHRABZADEH ET AL: "Optimization of response of chemiluminescence analyzers"**

EP 0 857 301 B1

**Description**

This invention relates to an ethene meter for determining a measure for the amount of ethene present in a gas, comprising an ozone generator for generating ozone, a reaction space to which ozone generated by the ozone generator and the gas are supplied, and a detector for detecting electromagnetic radiation which is generated in the reaction space by a chemical reaction between the ozone and the ethene in the gas, the amount of ozone which is supplied to the reaction space being greater than the amount of ethene which is supplied to the reaction space, and the detector delivering a signal representing the amount of detected radiation for obtaining the measure fro the amount of ethene in the gas.

The invention also relates to a method for determining a measure for the amount of ethene in a gas, wherein the gas and an excess of ozone with respect to the amount of ethene in the gas are supplied to a reaction space and wherein the electromagnetic radiation which is generated in the reaction space by a chemical reaction between the ozone and the ethene is detected for determining the measure for the amount of ethene.

Such an ethene meter and method are known from WO 86/01296. In these known systems, the ozone and the gas are supplied in a mutually separated condition to the reaction chamber. In the reaction chamber the ozone and the gas are mixed with each other, so that the ozone and the ethene can react with each other. In principle, the system can be carried out continuously as well as discontinuously. In a continuous system the gas and the ozone are continuously supplied to the reaction chamber, flow through the reaction chamber and thereafter leave the reaction chamber. Here, the residence time in the reaction chamber has been chosen such that at least substantially all of the ethene in the reaction chamber will react with the ozone. The amount of detected electromagnetic radiation is then a measure for the amount of ethene which has reacted with the ozone.

Of course, it is also possible to bring a predetermined amount of gas and ozone together in the reaction chamber to allow this amount to flow from the reaction chamber again some time later. Here, the residence time in the reaction chamber has again been chosen such that at least substantially all of the ethene in the reaction chamber will react with the ozone.

An application of the above is found, inter alia, among tulip growers. It is important that the ethene content of air in storage cells in which tulip bulbs are disposed be maintained as low as possible. In general, the standard is that the ethene content in the air should not exceed 0.1 ppm. If the ethene content becomes too high, the metabolism of the tulip bulbs will increase, so that the weight of the deliverable bulbs decreases. Moreover, research has shown that even at lower ethene contents the metabolism in the bulbs can increase. It is therefore of importance to be able to measure the ethene content very accurately. If the ethene content is too high, the air can thereupon be refreshed. A problem presenting itself, however, is that the state of the art ethene meter and the state of the art method cannot detect ethene contents below 0.1 ppm. Accordingly, the known ethene meter can only give off an alarm when the ethene content exceeds a limit value of 0.1 ppm. It is not possible, however, to establish what the ethene content is when the ethene content is less than 0.1 ppm.

For other applications too, there is a desire to be able to determine the ethene content in gases, for instance in connection with plants in which flue gases are cleaned. The ethene content of these flue gases too must be determined accurately.

The object of the invention is to provide an ethene meter and a method which make it possible to determine the ethene content in gas in a range of about 0.1 ppm to 10 ppm and of 0.01 ppm to 1 ppm.

To that end, the ethene meter is characterized, according to the invention, in that the ethene meter further comprises a pre-reaction space, to which the gas and the ozone are supplied for forming a mixture of the gas and the ozone, the pre-reaction space being in fluid communication with the reaction space so that the mixture can flow from the pre-reaction space to the reaction space for the detection of the amount of ethene, and the detector detecting only the electromagnetic radiation coming from the reaction space. A basic idea of the invention is that other components that are present in the gas, specifically NO, also enter into a reaction with ozone whereby electromagnetic radiation is liberated. In the known system, this has as a consequence that the electromagnetic radiation being detected originates not only from ozone reacting with ethene but also from ozone reacting with NO. The amount of detected electromagnetic radiation is therefore not a true measure for the amount of ethene that has reacted with ozone. In accordance with the invention, the gas and the ozone are preliminarily supplied to a pre-reaction space. In this pre-reaction space, at least substantially all of the NO present in the gas will react with the ozone. At the same time, only a negligible part of the amount of ethene present in the gas will react with the ozone. This is caused by the fact that the reaction between NO and ozone proceeds about 10,000 times as fast as the reaction between ethene and ozone. Accordingly, when a mixture of the gas and the ozone leaves the pre-reaction space, this mixture will comprise at least substantially exclusively ozone and ethene. NO will no longer be present in the mixture inasmuch as it has already reacted with ozone in the pre-reaction space. When the thus-obtained mixture is passed from the pre-reaction space to the reaction space, the amount of electromagnetic radiation which is detected by the detector in the reaction space will originate at least substantially exclusively from the reaction between ozone and ethene. The consequence is that the accuracy of the ethene meter according to the invention is particularly high: amounts of ethene of about 10 ppb (parts per billion) and higher can be detected. The amount o ethene which has reacted with ozone in the pre-reaction space can be disregarded as being negligible here because substantially all of the ethene present in the gas will react in the reaction space. By contrast, as discussed above, other components that are present in the gas, such as NO, toluene and HCN will react in the pre-reaction space.

Review of Scientific Instruments, vol. 53, no. 12, December 1982, New York, US, pages 1899-1902; A.C. Delany et al.: "Modification of a commercial $NO_x$ detector for high sensitivity" discloses an NO-detector. The object disclosed is to detect NO whereby a compensation for background reactions which are caused by the fact that ozone reacts with other atmospheric constituents and most important with the wall of the reaction chamber. In order to correct for this background radiation, the measurement of NO is carried out in three separate steps:

1. In order to measure the background reactions, the gas to be analysed is submitted to a pre-reaction chamber in a first step. In this pre-reaction chamber, ozone is mixed with the sample. Then the mixture flows to the reaction chamber. In the reaction chamber a PMT is used for measuring the omitted light.

2. In the second step, the gas to be analysed is submitted directly to the reaction chamber. Hence, in this second step the pre-reaction chamber is not used;

3. In order to obtain the end results in a third step, the measurements obtained in the first step are combined with the measurements obtained in the second step.

Hence, according to Review of Scientific Instruments, three separate steps have to be carried out to obtain the final endresult. Clearly, this is totally different from the present invention wherein the pre-reaction chamber is always used, and wherein only one single step is required to obtain the final endresult.

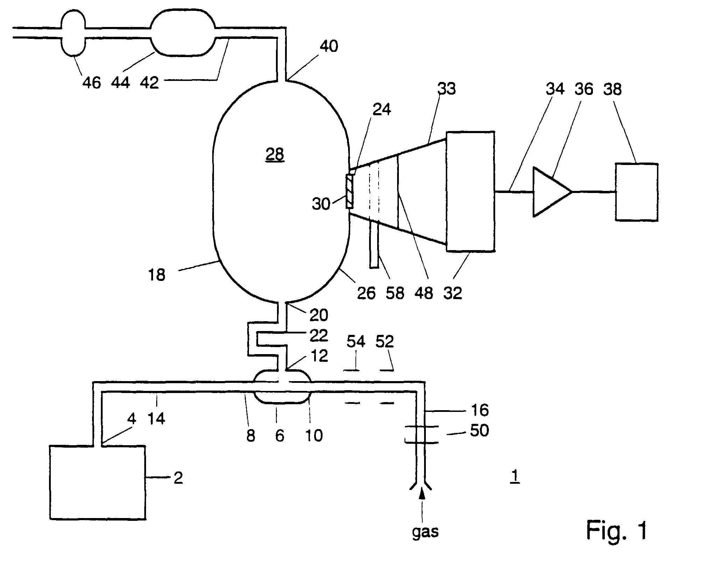

A method according to the invention is characterized in that the gas and the ozone are fist joined together and mixed before being passed to the reaction space; whereafter the mixture of the combined gas and ozone is supplied to the reaction space for determining the amount of ethene on the basis of the electromagnetic radiation coming exclusively from the reaction space. The invention will now be further elucidated on the basis of a number of possible embodiments of an ethene meter shown in Figs. 1-3.

In Fig. 1 reference numeral 1 designates an ethene meter according to the invention. For ethene ($C_2H_4$), two names are current. The first name is the systematic name ethene, used in modern chemistry. From this nomenclature, it appears, among other things, that what is involved is an aliphatic hydrocarbon with two carbon atoms and a mono-unsaturated compound (C=C). The other, old name for the same substance, however, is ethylene. Accordingly, when hereinafter mention is made of ethene, this is understood to mean ethylene as well.

The ethene meter 1 comprises an ozone generator 2, known per se, with an outlet 4 for delivering ozone ($O_3$). The meter further comprises a pre-reaction chamber 6 which has a first inlet 8, a second inlet 10 and an outlet 12. The inlet 8 is connected via line 14 with the outlet 4 of the ozone generator 2. The second inlet 10 is connected with a line 16 to which a gas is supplied whose ethene content is to be determined. The ethene meter further comprises a reaction chamber 18. The reaction chamber 18 comprises an inlet 20 which is connected via line 22 to the outlet 12 of the pre-reaction chamber 6. In an opening 24 of a wall 26 which encloses a reaction space 28 of the reaction chamber 18, a glass plate or filter 30 is arranged in a sealing manner. Placed opposite the glass plate or filter 30 is a detection unit 32, which is arranged for detecting electromagnetic radiation which is present in the reaction chamber 18. The space between the detection unit 32 and the glass plate or filter 30 is enclosed by a funnel 33, so that the detection unit 32 will exclusively detect electromagnetic radiation coming from the reaction chamber 18. Accordingly, the detection unit is disposed in such a manner that only the electromagnetic radiation coming from the reaction space is detected, that is, no electromagnetic radiation coming from the pre-reaction space is then detected. The detection unit 32 generates on line 34 a signal that is related to the intensity of the radiation coming from the reaction chamber 18, detected by the detection unit 32. This signal is applied to an amplifier 36. The output signal of the amplifier 36 is applied to the control unit 38. The control unit 38 generates on the basis of the output signal of the amplifier 36 a number which is a measure for the amount of ethene in the gas being supplied to line 16.

The reaction chamber 18 further comprises an outlet 40 which is connected through a line 42 to the inlet of an ozone filter 44. The outlet of the ozone filter 44 is connected to a pump 46. The outlet of the pump 46 can terminate, for instance, in the surroundings of the ethene monitor.

The operation of the system is as follows. The gas whose ethene content is to be determined is supplied to the line 16. Concurrently, ozone is generated using the ozone generator 2. The pump 46 creates a reduced pressure in the reaction chamber 18 via the ozone filter 44 and the line 42. As a result of all this, the gas and the ozone are sucked to the pre-reaction chamber 6. In the pre-reaction chamber 6, which encloses the pre-reaction space, the gas and the ozone will be mixed with each other. A proper mixing can occur when the Reynolds number of the gas and the ozone flowing through the pre-reaction chamber and leaving the pre-reaction chamber via the outlet 12 has a value, for instance, greater than 2,500. The residence time of the gas and the ozone in the pre-reaction chamber 6 is so long that components such as NO, which are present in the gas will react completely with ozone. Electromagnetic radiation is thereby generated, which, however, will not reach the detector 32. To ensure that the electromagnetic radiation which is generated in the pre-reaction chamber 6 cannot reach the detector 32, the line 22 is provided with a bend in this example. Since the reaction between ozone and NO proceeds 10,000 times faster than the reaction between ozone and ethene, only a negligibly small part of the amount of ethene will react with the ozone in the pre-reaction chamber 6. The mixture of ozone and gas will then flow via line 22 to the reaction chamber 18. When the mixture has reached the reaction chamber 18, at least substantially no NO will be present in the mixture anymore. At the same time, at least substantially all of the ethene that was present in the gas when it flowed into the line 16 will still be present in the mixture. The residence time of the mixture in the reaction chamber has a minimum duration such that a significant part of the ethene that is present in the mixture will react with the ozone in the reaction space enclosed by the reaction chamber. The occurring reactions involved are the following:

$$C_2H_4 + 2\,O_3 \rightarrow CH_2OOOCH_2 \rightarrow CH_2O + OCH_2O$$

$$OCH_2O \rightarrow CO + H_2O \text{ (about 60\%)}$$

$$OCH_2O \rightarrow CO_2 + H_2 \text{ (about 40\%)}$$

There is a large excess of ozone present, so that at least substantially all of the ethene that is present in the gas can react with the ozone. In the reactions according to the above formulae, electromagnetic radiation is released with a wavelength of about 300 to 600 nm. The intensity of this radiation will be a measure for the amount of ethene in the gas. The signal which is generated by the amplifier 36 is proportional to the intensity of the radiation. The control unit 38 in this example comprises a display indicating the amount of ethene in the gas in ppm or ppb. After detection, the mixture will leave the ethene meter via line 42, filter 44 and the pump 46. The filter 44 ensures that any noxious substances present in the gas are filtered out.

The reaction time of NO with ozone is in practice of an order of magnitude of milliseconds, while the reaction time of ethene with ozone is of an order of magnitude of seconds. The residence time of the mixture in the pre-reaction chamber 6 will therefore have be a few milliseconds, while the residence time of the mixture in the reaction chamber will have to be a few seconds. All this can be realized by designing the volume of the pre-reaction chamber 6 to be smaller than the volume of the reaction chamber 18 by a factor of, for instance, 100 or more.

If the gas contains carbon monoxide as well, carbon monoxide will also react with ozone, whereby electromagnetic radiation is generated. The reaction time of carbon monoxide with ozone is of an order of magnitude of days. This means that in the above-outlined circumstances the electromagnetic radiation which is generated by a reaction of ozone with carbon monoxide in the reaction chamber 18 is negligible relative to the electromagnetic radiation generated by the reaction between ozone and ethene.

According to a particular embodiment, the ethene meter further comprises at least an optical filter 48 for filtering the electromagnetic radiation before it falls on detector unit 32. In particular, the filter is so dimensioned that it substantially passes electromagnetic radiation of a wavelength corresponding to the wavelength of the electromagnetic radiation which is generated in a reaction between ozone and ethene. This means that if any other reactions should occur in the reaction chamber 18 whereby electromagnetic radiation is generated, this electromagnetic radiation will generally not reach the detector unit 32. The filter 48 is a bandpass filter. It is also possible, however, to employ other types of filters, such as, for instance, a high-pass filter which only transmits electromagnetic radiation of a wavelength greater than 300 nm. For completeness, it is noted that the glass plate 30 can also be designed as an optical filter which is comparable to the optical filter 48, so that this last filter can be omitted.

In particular, the ethene meter further comprises cooling means included upstream of the pre-reaction chamber for cooling the gas to, for instance, a temperature of -100°C. This provides the advantage that particular components of the gas, such as alkenes, aromatics and sulfur compounds will precipitate and thereby be removed from the gas. This is in contrast with the ethene, which will retain its gaseous state. When thereupon the amount of ethene is determined in the reaction chamber, no interfering influences will be sustained, in any case not from the alkenes, aromatics and sulfur compounds mentioned.

Further, the ethene meter can comprise a gas dryer 52 included upstream of the pre-reaction space 6 for extracting *inter alia* $H_2S$ from the gas. A suitable gas dryer is, for instance, a gas dryer of the type marketed by the firm of Perma Pure and which is known under the name of "Perma Pure Dryers" (PPD). These dryers consist of a permeable inner tube through which the gas to be dried is passed. Arranged around this inner tube is an outer tube, and, for instance, air is caused to flow through the space formed between the inner tube and the outer tube. The permeable inner tube has the property of allowing, for instance, $H_2S$ to pass, while simultaneously constituting a barrier to ethene. In this way, on the basis of a diffusion process, $H_2S$ will be transported from the inner tube via the wall of the inner tube to the space between the outer tube and the inner tube. The result is that the gas flowing through the inner tube will be stripped of $H_2S$. This also has as an advantage that $H_2S$ cannot have any interfering influences when measuring the ethene in the reaction chamber 18.

In addition, the ethene meter can further comprise a Carbon Cicker 54, known per se, which is included upstream of the pre-reaction chamber 6 for extracting aromatics and hydrocarbons from the gas. This also has the advantage that the aromatics and higher hydrocarbons mentioned are removed from the gas and thus cannot exert any interfering influence on the measurement of the amount of ethene in the reaction chamber 18. 'Interfering influences' is here understood to mean that the above-mentioned alkenes, aromatics, sulfur compounds $H_2S$ and higher hydrocarbons can also react with ozone, whereby electromagnetic radiation is released.

In particular, the ethene meter also comprises a plate 58 which can be slipped between the glass plate 30 and the detection unit 32. When the plate 58 has thus been fitted between the glass plate 30 and the detection unit 32 (this condition is shown in dotted lines in Fig. 1), the amount of electromagnetic radiation reaching the detection unit 32 will be at least substantially equal to 0. The control unit 38 then measures an off-set signal which is generated by the detection unit 32 and the amplifier 36. If the off-set signal has thus been determined, the plate 58 can be removed, such as is shown in Fig. 1. The control unit 38 can subsequently correct with the off-set mentioned the signal delivered by the amplifier 36 when measuring an amount of ethene in the reaction chamber 18, by subtracting the off-set from the measured signal. This involves a method which is known per se and accordingly needs no further explanation here. Another method for compensating an off-set is that initially no gas but merely ozone is fed to the reaction chamber 18. Then control unit 38 again determines the signal which is generated by the amplifier 36. This signal is the off-set signal. When thereafter the amount of ethene is measured in the manner described hereinabove, this measuring value is again corrected, in the manner known per se, with the off-set determined.

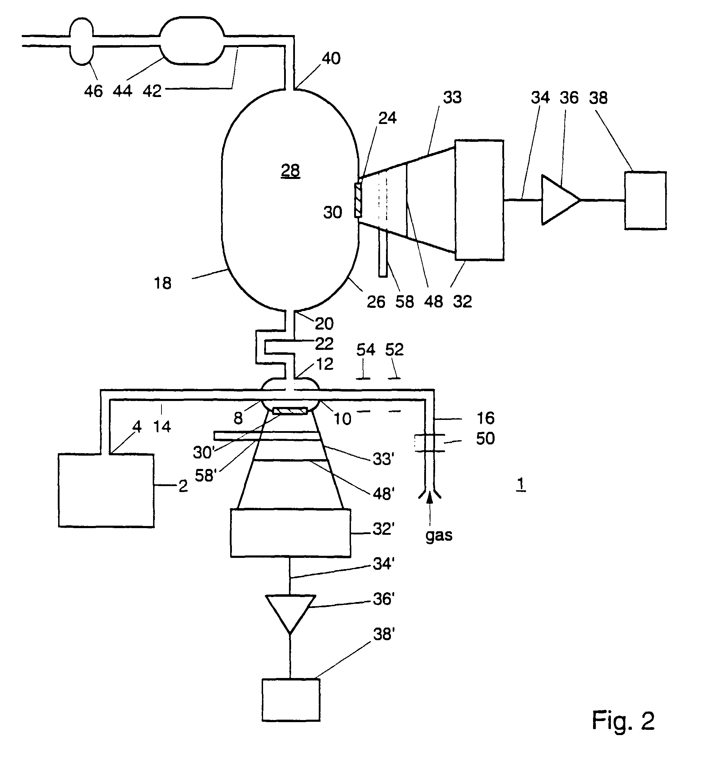

Fig. 2 shows an alternative embodiment of the ethene meter according to the invention. In Figs. 1 and 2, corresponding parts have been provided with the same reference numerals. In the ethene meter according to Fig. 2, in a wall of the pre-reaction chamber 6 a glass plate 30' is arranged. Placed opposite the glass plate 30' is a detection unit 32', which is arranged for detecting electromagnetic radiation which is present in the pre-reaction chamber 6. The space between the detection unit 32' and the glass plate 30' is enclosed by a funnel 33', so that the detection unit 32' will exclusively detect electromagnetic radiation from the pre-reaction chamber 6. The detection unit 32' generates on line 34' a signal related to the intensity of the radiation detected by the detection unit 32', coming from the pre-reaction chamber 6. This signal is applied to an amplifier 36'. The output signal of the amplifier 36' is applied to the control unit 38'. Because, as set out hereinbefore, NO present in the gas will react with ozone in the pre-reaction chamber 6, the output signal which the amplifier 36' feeds to the control unit 38' will be a measure for the amount of NO in the gas. The control unit 38' accordingly generates on the basis of the output signal of the amplifier 36' a number which is a measure for the amount of NO in the gas that is supplied to line 16. Owing to the reaction between ethene and ozone proceeding much more slowly than the reaction between NO and ozone, the electromagnetic radiation generated in the pre-reaction chamber 6 will have been generated at least substantially by the reaction between NO and ozone. In other words, the output signal of the amplifier 36' will in fact be a measure for the amount of NO in the gas that is fed to line 16. In particular, the ethene meter can further comprise an optical filter 48' which is placed between the glass plate 30' and the detection unit 32'. The optical filter 48' is preferably designed as a band-pass filter which passes in particular electromagnetic radiation of a frequency corresponding to the frequency of electromagnetic radiation generated in the reaction between ozone and NO. Here, too, it is possible that the glass plate 30' is designed as an optical filter, so that the optical filter 48' can be omitted. Using a plate 58', the off-set of the detection unit 32' and the amplifier 36' can be compensated in a manner entirely analogous to that described with reference to Fig. 1.

In Fig. 2 two detection units 32 and 32', amplifiers 36 and 36', and control units 38 and 38' are present. For completeness, it is noted that obviously it is also possible, using only one detection unit 32, amplifier 36 and control unit 38, to measure alternately the electromagnetic radiation generated, respectively, in the pre-reaction chamber 6 and in the reaction chamber 18. This can be effected, for instance, by directing the electromagnetic radiation leaving the pre-reaction chamber 6 via the glass plate 30', to the detection unit 32 by means of mirrors. When thereupon by means of the plates 58 and 58' the electromagnetic radiation coming from the reaction chamber 18 and the pre-reaction chamber 6 is alternately blocked, the amount of ethene and NO will be measured alternately.

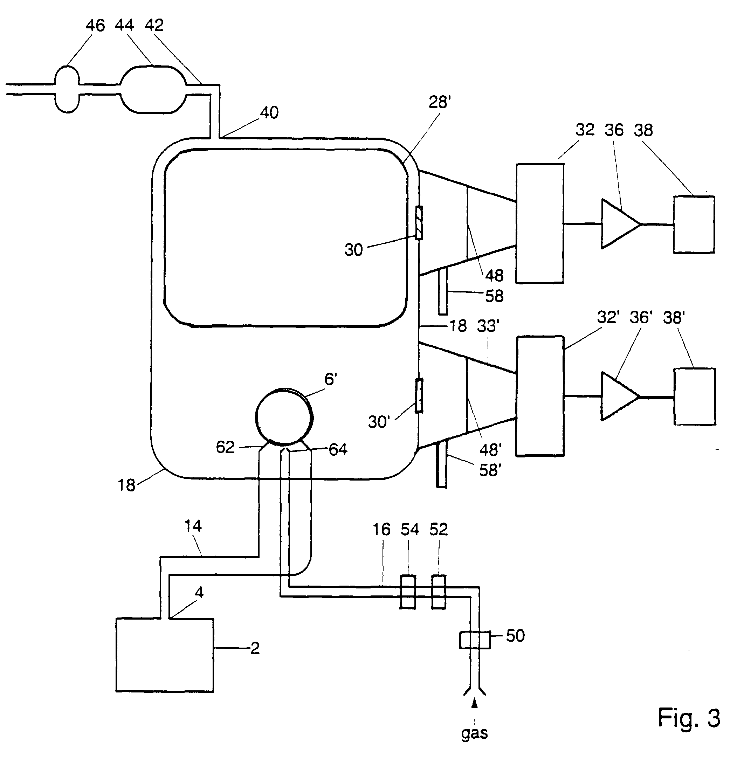

Fig. 3 shows an alternative embodiment of an ethene meter according to the invention, where parts corresponding to Figs. 1 and 2 have been provided with the same reference numerals. The ethene meter according to Fig. 3 only comprises a single reaction chamber 18. However, the reaction chamber 18 is imaginarily subdivided into a pre-reaction space 6' and a reaction space 28'. The reaction spaces 6' and 28' are indicated in dots in Fig. 3. The pre-reaction space 6' is spatially separated from the reaction space 28'. The detection unit 32 is so arranged that only electromagnetic radiation coming from the reaction space 28' is detected. Accordingly, the detection unit 32 then does not detect electromagnetic radiation coming from the pre-reaction space 6'. The ozone is supplied through line 14 to the reaction chamber 18. Likewise the gas is supplied through line 16 to the reaction chamber 18. The free ends 62 and 64 of lines 14 and 16, respectively, are arranged in mutual proximity; the arrangement being such that the gas leaving the line 16 will mix with the ozone leaving the line 14. This can be realized, for instance, in a manner known per se by having the free ends 62 and 64, respectively, taper to some extent. The egressive gas streams from the lines 62 and 64 will thereby be accelerated. When these gas streams moreover collide with each other, they will mix properly in an area located close to and around the free ends 62 and 64. This area is designated pre-reaction space 6'. The consequence is that, in a manner entirely similar to that discussed with reference to Figs. 1 and 2 in relation to the pre-reaction space 6, ozone and ON will react with each other in the pre-reaction space 6'. The mixture of ozone and the gas then flows from the pre-reaction space 6' to the reaction space 28'. What will occur in the reaction chamber 28' is then exclusively, at least substantially so, a chemical reaction between ozone on the one hand and ethene on the other. The reaction space 28' is thus functionally comparable to the reaction chamber 18 and the reaction space 28 of Fig. 1.

In the wall of the reaction chamber 18, again a window 30 is arranged for the purpose of measuring the electromagnetic radiation generated in the reaction space 28', with the aid of the detection unit 32, the amplifier 36 and the control unit 38. All this is entirely analogous to what has been discussed in relation to Figs. 1 and 2 and will not be further elucidated here. Further, in a wall of the reaction chamber 18 a glass plate 30' can be arranged for measuring the amount of electromagnetic radiation generated in the pre-reaction space 6', with the aid of a detection unit 32', an amplifier 36' and a control unit 38'. The detection unit 32' is so arranged that only electromagnetic radiation coming from the pre-reaction space 6' is detected. Accordingly, the detection unit 32' detects no electromagnetic radiation coming from the reaction space 28'. In a manner again entirely analogous to that discussed with reference to the ethene meter according to Fig. 2, the amount of NO in the gas is thus determined. Obviously, in a manner entirely analogous to that described in relation to the ethene meter according to Fig. 2, it is possible, with the aid of the detection unit 32, the amplifier 36 and the control unit 38, to alternately measure the electromagnetic radiation coming from, respectively, the reaction space 28' and the pre-reaction space 6'. These and other obvious variants are all understood to fall within the scope of the invention.

The above-disclosed ethene meters are suitable for measuring the amount of ethene in a continuous gas stream being supplied to the line 16. It is also possible, however, to operate the ethene meter discontinuously. Then a predetermined amount of gas together with a predetermined amount of ozone are supplied to the pre-reaction space 6 via line 16 and 14, respectively. During this period of supply, the pump 46 will have been activated. The mixture formed in the pre-reaction space 6 then flows via line 22 to the reaction space 18, so that the amount of ethene in the mixture is determined. To that effect, the control unit 38 may comprise an integrator to determine the total amount of electromagnetic radiation. This amount is then a measure for the amount of ethene of the mixture in the reaction chamber 18.

The detector unit 32, the amplifier 36 and the control unit 38 can also be designed as one detector. In addition, the pre-reaction chamber 6 can be designed as a simple T-piece, as is shown in Fig. 1 in dots.

## Claims

1. An ethene meter for determining a measure for the amount of ethene present in a gas, comprising an ozone generator for generating ozone, a reaction space to which ozone generated by the ozone generator and the gas are supplied, and a detector for detecting electromagnetic radiation which is generated in the reaction space by a chemical reaction between the ozone and the ethene in the gas, the amount of ozone which is supplied to the reaction space being greater than the amount of ethene which is supplied to the reaction space, and the detector delivering a signal representing the amount of detected radiation for obtaining the measure for the amount of ethene in the gas, characterized in that the ethene meter further comprises a pre-reaction space, to which the gas and the ozone are supplied for forming a mixture of the gas and the ozone, the pre-reaction space being in fluid communication with the reaction space, so that the mixture can flow from the pre-reaction space to the reaction space for the detection of the amount of ethene, the detector detecting only the electromagnetic radiation coming from the reaction space.

2. An ethene meter according to claim 1, characterized in that the ethene meter further comprises a reaction chamber in which the reaction space is located, and a pre-reaction chamber in which the pre-reaction space is located, the pre-reaction chamber comprising a first inlet and a second inlet for supplying the gas and the ozone, respectively, to the pre-reaction chamber, and the pre-reaction chamber comprising an outlet which is connected to the reaction chamber for supplying the mixture of the gas and the ozone to the reaction chamber.

3. An ethene meter according to claim 1, characterized in that the ethene meter comprises a reaction chamber which comprises the pre-reaction space and the reaction space, the detector further comprising optical means for detecting electromagnetic radiation coming from the reaction space.

4. An ethene meter according to any one of the preceding claims, characterized in that the detector comprises means for alternately detecting the electromagnetic radiation coming from the reaction space and the pre-reaction space, respectively.

5. An ethene meter according to any one of the preceding claims 1-3, characterized in that the meter comprises a second detector for detecting electromagnetic radiation coming from the pre-reaction space.

6. An ethene meter according to claim 2, characterized in that, in use, the flow rate of the ozone and the gas in the pre-reaction chamber is so high as to give rise to turbulent currents in the pre-reaction chamber whereby the ozone and the gas are mixed with each other.

7. An ethene meter according to any one of the preceding claims 2 or 6, characterized in that the ethene meter is so dimensioned that the residence time of the gas in the pre-reaction chamber has a value such that substantially all of the NO present in the gas reacts with the ozone and at least substantially none of the ethene present in the gas reacts with the ozone.

8. An ethene meter according to claim 2, 6 or 7, characterized in that the pre-reaction chamber is smaller than the reaction chamber.

9. An ethene meter according to any one of the preceding claims, characterized in that the ethene meter is so dimensioned that in use the mixture resides at least about 100 to 1,000 times longer in the reaction space than in the pre-reaction space.

10. An ethene meter according to claims 8 and 9, characterized in that the pre-reaction chamber is at least about 1,000 times smaller than the reaction chamber.

11. An ethene meter according to any one of the preceding claims, characterized in that the detector comprises means for compensating an off-set current in the detector.

12. An ethene meter according to any one of the preceding claims, characterized in that the ethene meter further comprises at least an optical filter for filtering the electromagnetic radiation coming from the reaction space before this electromagnetic radiation falls on the detector.

13. An ethene meter according to claim 12, characterized in that the filter passes at least substantially electromagnetic radiation of a wavelength corresponding to the wavelength of electromagnetic radiation generated in a reaction between ozone and ethene.

14. An ethene meter according to claim 12 or 13, characterized in that the filter suppresses at least electromagnetic radiation of a wavelength corresponding to the wavelength of electromagnetic radiation generated in a reaction between ozone and NO.

15. An ethene meter according to any one of the preceding claims 2, 6, 7, or 8, characterized in that the pre-reaction chamber has the form of a T-piece.

16. An ethene meter according to any one of the preceding claims, characterized in that the ozone generator generates such an amount of ozone that the amount of ozone which is supplied to the pre-reaction space is greater than the amount of ethene which is supplied to the pre-reaction space.

17. An ethene meter according to any one of the preceding claims, characterized in that the ethene meter further comprises cooling means included upstream of the pre-reaction space for cooling the gas.

18. An ethene meter according to any one of the preceding claims, characterized in that the ethene meter further comprises a gas dryer included upstream of the pre-reaction space for extracting $H_2S$ from the gas.

19. An ethene meter according to any one of the preceding claims, characterized in that the ethene meter further comprises a Carbon Cicker included upstream of the pre-reaction space for extracting aromatics and hydrocarbons from the gas.

20. A method for determining a measure for the amount of ethene in a gas, wherein the gas and an excess of ozone with respect to the amount of ethene in the gas are supplied to a reaction space and wherein the electromagnetic radiation which is generated in the reaction space by a chemical reaction between the ozone and the ethene is detected for determining the measure for the amount of ethene, characterized in that the gas and the ozone are first joined together and mixed before being passed to the reaction space; whereafter the mixture of the combined gas and ozone is supplied to the reaction space for determining the amount of ethene on the basis of the electromagnetic radiation coming exclusively from the reaction space.

21. A method according to claim 20, characterized in that the ozone and the gas are joined together in a pre-reaction chamber comprising the pre-reaction space, whereafter the mixture is supplied from the pre-reaction chamber to the reaction space.

22. A method according to claim 20 or 21, characterized in that the flow rate of the ozone and the gas in the pre-reaction space is chosen to be so high as to give rise to turbulent currents in the pre-reaction space whereby the ozone and the gas are mixed with each other.

23. A method according to claim 20, 21 or 22, characterized in that the residence time of the gas in the pre-reaction space is chosen to be such that at least substantially all of the NO present in the gas will react with the ozone and at least substantially none of the ethene present in the gas will react with the ozone.

24. A method according to any one of claims 20-23, characterized in that the mixture resides at least about 100 to 1,000 times longer in the reaction space than in the pre-reaction space.

25. A method according to any one of claims 21-24, characterized in that the pre-reaction space is smaller than the reaction space.

26. A method according to claims 24 and 25, characterized in that the pre-reaction chamber is at least about 1,000 times smaller than the reaction chamber.

27. A method according to any one of claims 20-26, characterized in that both the electromagnetic radiation coming from the pre-reaction space and the electromagnetic radiation coming from the reaction space are detected separately from each other for determining, respectively, the amount of NO and ethene in the gas.

28. A method according to any one of the preceding claims 20-27, characterized in that the measured amount of electromagnetic radiation is compensated for an off-set current of the detector.

29. A method according to any one of the preceding claims 20-28, characterized in that the electromagnetic radiation coming from the reaction space is filtered before being detected.

30. A method according to claim 29, characterized in that in the filtration at least substantially exclusively electromagnetic radiation is passed having a wavelength corresponding to the wavelength of electromagnetic radiation generated in a reaction between ozone and ethene.

31. A method according to claim 29 or 30, characterized in that at least electromagnetic radiation is suppressed with a wavelength corresponding to the wavelength of the electromagnetic radiation generated in a reaction between ozone and NO.

32. A method according to any one of the preceding claims 20-31, characterized in that the gas is first cooled before the gas is supplied to the pre-reaction space.

33. A method according to any one of the preceding claims 20-32, characterized in that $H_2S$ is extracted from the gas before the gas is supplied to the pre-reaction space.

34. A method according to any one of the preceding claims 20-33, characterized in that aromatics and hydrocarbons are extracted from the gas before the gas is supplied to the pre-reaction space.

**Patentansprüche**

1. Ethen-Bestimmungsgerät zum Bestimmen eines Maßes für die Menge von Ethen, die in einem Gas vorhanden ist, mit einem Ozongenerator zum Erzeugen von Ozon, einem Reaktionsraum, dem das durch den Ozongenerator erzeugte Ozon und das Gas zugeführt werden, und einem Detektor zum Nachweisen elektromagnetischer Strahlung, die durch eine chemische Reaktion zwischen dem Ozon und dem Ethen in dem Gas in dem Reaktionsraum erzeugt wird, wobei die Menge von Ozon, die dem Reaktionsraum zugeführt wird, größer als die Menge von Ethen ist, die dem Reaktionsraum zugeführt wird, und wobei der Detektor ein Signal liefert, das die Menge der nachgewiesenen Strahlung repräsentiert, um ein Maß für die Menge von Ethen in dem Gas zu erhalten, dadurch gekennzeichnet, dass das Ethen-Bestimmungsgerät weiter einen Vorreaktionsraum aufweist, dem das Gas und das Ozon zugeführt werden, um ein Gemisch aus dem Gas und dem Ozon zu bilden, wobei der Vorreaktionsraum in Fließverbindung mit dem Reaktionsraum steht, so dass das Gemisch aus dem Vorreaktionsraum in den Reaktionsraum fließen kann, um die Menge von Ethen nachzuweisen, wobei der Detektor nur elektromagnetische Strahlung nachweist, die aus dem Reaktionsraum kommt.

2. Ethen-Bestimmungsgerät nach Anspruch 1, dadurch gekennzeichnet, dass das Ethen-Bestimmungsgerät weiter eine Reaktionskammer, in der der Reaktionsraum liegt, und eine Vorreaktionskammer aufweist, in der der Vorreaktionsraum liegt, wobei die Vorreaktionskammer einen ersten Einlass bzw. einen zweiten Einlass zum Zuführen des Gases bzw. des Ozons in die Vorreaktionskammer aufweist, und wobei die Vorreaktionskammer einen Auslass hat, der mit der Reaktionskammer verbunden ist, um das Gemisch aus dem Gas und dem Ozon der Reaktionskammer zuzuführen.

3. Ethen-Bestimmungsgerät nach Anspruch 1, dadurch gekennzeichnet, dass das Ethen-Bestimmungsgerät eine Reaktionskammer aufweist, die in den Vorreaktionsraum und den Reaktionsraum aufweist, wobei der Detektor ferner eine optische Einrichtung zum Nachweisen der aus dem Reaktionsraum kommenden elektromagnetischen Strahlung aufweist.

4. Ethen-Bestimmungsgerät nach einem der vorhergehenden Ansprüche, dadurch gekennzeichnet, dass der Detektor eine Einrichtung aufweist, um abwechselnd die aus dem Reaktionsraum bzw. die aus dem Vorreaktionsraum kommende elektromagnetische Strahlung nachzuweisen.

5. Ethen-Bestimmungsgerät nach einem der vorhergehenden Ansprüche 1 bis 3, dadurch gekennzeichnet, dass das Bestimmungsgerät einen zweiten Detektor zum Nachweis von elektromagnetischer Strahlung aufweist, die aus dem Vorreaktionsraum kommt.

6. Ethen-Bestimmungsgerät nach Anspruch 2, dadurch gekennzeichnet, dass im Betrieb die Fließgeschwindigkeit des Ozons und des Gases in der Vorreaktionskammer so hoch ist, dass turbulente Strömungen in der Vorreaktionskammer auftreten, wodurch das Ozon und das Gas miteinander gemischt werden.

7. Ethen-Bestimmungsgerät nach einem der vorhergehenden Ansprüche 2 oder 6, dadurch gekennzeichnet, dass das Ethen-Bestimmungsgerät solche Abmessungen hat, dass die Aufenthaltszeit des Gases in der Vorreaktionskammer einen Wert hat, so dass im Wesentlichen das gesamte in dem Gas vorhandene NO mit dem Ozon reagiert und im Wesentlichen nichts von dem Ethen, das in dem Gas vorhanden ist, mit dem Ozon reagiert.

8. Ethen-Bestimmungsgerät nach Anspruch 2, 6 oder 7, dadurch gekennzeichnet, dass die Vorreaktionskammer kleiner als die Reaktionskammer ist.

9. Ethen-Bestimmungsgerät nach einem der vorhergehenden Ansprüche, dadurch gekennzeichnet, dass das Ethen-Bestimmungsgerät solche Abmessungen hat, dass sich das Gemisch im Betrieb in dem Reaktionsraum wenigstens 100 bis 1000 mal länger als in dem Vorreaktionsraum aufhält.

10. Ethen-Bestimmungsgerät nach Ansprüchen 8 und 9, dadurch gekennzeichnet, dass die Vorreaktionskammer wenigstens etwa 1000 mal kleiner als die Reaktionskammer ist.

11. Ethen-Bestimmungsgerät nach einem der vorhergehenden Ansprüche, dadurch gekennzeichnet, dass der Detektor eine Einrichtung zum Kompensieren eines Offset-Stroms in dem Detektor aufweist.

12. Ethen-Bestimmungsgerät nach einem der vorhergehenden Ansprüche, dadurch gekennzeichnet, dass das Ethen-Bestimmungsgerät weiter wenigstens einen optischen Filter aufweist, um die aus dem Reaktionsraum kommende elektromagnetische Strahlung zu filtern, bevor diese elektromagnetische Strahlung auf den Detektor fällt.

13. Ethen-Bestimmungsgerät nach Anspruch 12, dadurch gekennzeichnet, dass der Filter elektromagnetische Strahlung einer Wellenlänge, die der Wellenlänge von elektromagnetischer Strahlung, die in einer Reaktion zwischen Ozon und Ethen erzeugt wird, entspricht, wenigstens im Wesentlichen passieren lässt.

14. Ethen-Bestimmungsgerät nach Anspruch 12 oder 13, dadurch gekennzeichnet, dass der Filter wenigstens elektromagnetischer Strahlung einer Wellenlänge, die der Wellenlänge von elektromagnetischer Strahlung entspricht, die in einer Reaktion zwischen Ozon und NO erzeugt wird, unterdrückt.

15. Ethen-Bestimmungsgerät nach einem der vorhergehenden Ansprüche 2, 6, 7 oder 8, dadurch gekennzeichnet, dass die Vorreaktionskammer die Form eines T-Stücks hat.

16. Ethen-Bestimmungsgerät nach einem der vorhergehenden Ansprüche, dadurch gekennzeichnet, dass der Ozongenerator eine solche Menge Ozon erzeugt, dass die Menge Ozon, die dem Vorreaktionsraum zugeführt wird, größer ist als die Menge Ethen, die dem Vorreaktionsraum zugeführt wird.

17. Ethen-Bestimmungsgerät nach einem der vorhergehenden Ansprüche, dadurch gekennzeichnet, dass das Ethen-Bestimmungsgerät weiter eine Kühleinrichtung aufweist, die stromaufwärts des Vorreaktionsraums enthalten ist, um das Gas zu kühlen.

18. Ethen-Bestimmungsgerät nach einem der vorhergehenden Ansprüche, dadurch gekennzeichnet, dass das Ethen-Bestimmungsgerät weiter einen Gastrockner aufweist, der stromaufwärts des Vorreaktionsraums enthalten ist, um $H_2S$ aus dem Gas zu extrahieren.

19. Ethen-Bestimmungsgerät nach einem der vorhergehenden Ansprüche, dadurch gekennzeichnet, dass das Ethen-Bestimmungsgerät weiter einen Carbon Cicker aufweist, der stromaufwärts des Vorreaktionsraums enthalten ist, um Aromaten und Kohlenwasserstoffe zu extrahieren.

20. Verfahren zum Bestimmen eines Maßes für die Menge von Ethen in einem Gas, wobei das Gas und ein Überschuss von Ozon in Bezug auf die Menge von Ethen in dem Gas einem Reaktionsraum zugeführt werden und wobei die elektromagnetische Strahlung, die durch eine chemische Reaktion zwischen dem Ozon und dem Ethen in dem Reaktionsraum erzeugt wird, nachgewiesen wird, um das Maß für die Menge von Ethen zu bestimmen, dadurch gekennzeichnet, dass das Gas und das Ozon zuerst zusammengeführt und gemischt werden, bevor sie in den Reaktionsraum geleitet werden, wonach das Gemisch von kombiniertem Gas und Ozon dem Reaktionsraum zugeführt wird, um die Menge von Ethen auf Grundlage der elektromagnetischen Strahlung, die ausschließlich aus dem Reaktionsraum kommt, zu bestimmen.

21. Verfahren nach Anspruch 20, dadurch gekennzeichnet, dass das Ozon und das Gas in einer Vorreaktionskammer zusammengeführt werden, die einen Vorreaktionsraum aufweist, wonach das Gemisch aus der Vorreaktionskammer dem Reaktionsraum zugeführt wird.

22. Verfahren nach Anspruch 20 oder 21, dadurch gekennzeichnet, dass die Fließgeschwindigkeit des Ozons und des Gases in dem Vorreaktionsraum so hoch gewählt wird, dass turbulente Strömungen in dem Vorreaktionsraum auftreten, wodurch das Ozon und das Gas miteinander gemischt werden.

23. Verfahren nach Anspruch 20, 21 oder 22, dadurch gekennzeichnet, dass die Aufenthaltszeit des Gases in dem Vorreaktionsraum so gewählt ist, dass wenigstens im Wesentlichen das gesamte in dem Gas vorhandene NO mit dem Ozon reagiert und wenigstens im Wesentlichen nichts von in dem Gas vorhandenen Ethen mit dem Ozon reagiert.

24. Verfahren nach einem der Ansprüche 20 bis 23, dadurch gekennzeichnet, dass sich das Gemisch in dem Reaktionsraum wenigstens etwa 100 bis 1000 mal länger aufhält als in dem Vorreaktionsraum.

25. Verfahren nach einem der Ansprüche 21 bis 24, dadurch gekennzeichnet, dass der Vorreaktionsraum kleiner als der Reaktionsraum ist.

26. Verfahren nach den Ansprüchen 24 und 25, dadurch gekennzeichnet, dass die Vorreaktionskammer wenigstens etwa 1000 mal kleiner als die Reaktionskammer ist.

27. Verfahren nach einem der Ansprüche 20 bis 26, dadurch gekennzeichnet, dass sowohl die elektromagnetische Strahlung, die aus dem Vorreaktionsraum kommt, als auch die elektromagnetische Strahlung, die aus dem Reaktionsraum kommt, getrennt voneinander nachgewiesen werden, um jeweils die Menge von NO und Ethen in dem Gas zu bestimmen.

28. Verfahren nach einem der vorhergehenden Ansprüche 20 bis 27, dadurch gekennzeichnet, dass die gemessene Menge elektromagnetischer Strahlung im Hinblick auf einen Offset-Strom des Detektors kompensiert wird.

29. Verfahren nach einem der vorhergehenden Ansprüche 20 bis 28, dadurch gekennzeichnet, dass die aus dem Reaktionsraum kommende elektromagnetische Strahlung gefiltert wird, bevor sie nachgewiesen wird.

30. Verfahren nach Anspruch 29, dadurch gekennzeichnet, dass bei der Filterung wenigstens im Wesentlichen ausschließlich elektromagnetische Strahlung hindurchgelassen wird, die eine Wellenlänge entsprechend der Wellenlänge elektromagnetischer Strahlung hat, die in einer Reaktion zwischen Ozon und Ethen erzeugt wird.

31. Verfahren nach Anspruch 29 oder 30, dadurch gekennzeichnet, dass wenigstens elektromagnetische Strahlung mit einer Wellenlänge entsprechend der Wellenlänge von elektromagnetischer Strahlung, die in einer Reaktion zwischen Ozon und NO erzeugt wird, unterdrückt wird.

32. Verfahren nach einem der vorhergehenden Ansprüche 20 bis 31, dadurch gekennzeichnet, dass das Gas zunächst gekühlt wird, bevor das Gas dem Vorreaktionsraum zugeführt wird.

33. Verfahren nach einem der vorhergehenden Ansprüche 20 bis 32, dadurch gekennzeichnet, dass $H_2S$ aus dem Gas extrahiert wird, bevor das Gas dem Vorreaktionsraum zugeführt wird.

34. Verfahren nach einem der vorhergehenden Ansprüche 20 bis 33, dadurch gekennzeichnet, dass Aromaten und Kohlenwasserstoffe aus dem Gas extrahiert werden, bevor das Gas dem Vorreaktionsraum zugeführt wird.

## Revendications

1. Appareil de dosage d'éthène pour déterminer la quantité d'éthène présente dans un gaz, comprenant un générateur d'ozone destiné à former de l'ozone, un espace réactionnel dans lequel arrivent l'ozone formé par le générateur d'ozone et le gaz, et un détecteur pour la détection du rayonnement électromagnétique formé dans l'espace réactionnel par une réaction chimique entre l'ozone et l'éthène contenu dans le gaz, la quantité d'ozone arrivant dans l'espace réactionnel étant supérieure à la quantité d'éthène arrivant dans l'espace réactionnel, et le détecteur émettant un signal représentant la quantité de rayonnement détecté indiquant la quantité d'éthène dans le gaz, caractérisé par le fait que l'appareil de dosage d'éthène comprend en outre un espace préréactionnel dans lequel arrivent le gaz et l'ozone et où se fait le mélange du gaz et de l'ozone, l'espace préréactionnel étant en communication fluide avec l'espace réactionnel de manière à ce que le mélange puisse s'écouler de l'espace préréactionnel vers l'espace réactionnel pour la mesure de la quantité d'éthène, le détecteur détectant uniquement le rayonnement électromagnétique provenant de l'espace réactionnel.

2. Appareil de dosage d'éthène selon la revendication 1, caractérisé par le fait que l'appareil de dosage comprend en outre une chambre réactionnel dans laquelle est situé l'espace réactionnel, et une chambre préréactionnelle dans laquelle est située l'espace préréactionnel, la chambre préréactionnelle comprenant une première entrée et une seconde entrée respectivement pour l'admission du gaz et de l'ozone dans la chambre préréactionnelle, et la chambre préréactionnelle comprenant une sortie qui est reliée à la seconde chambre réactionnelle et permet de faire passer le mélange de gaz et d'ozone dans la chambre réactionnelle.

3. Appareil de dosage d'éthène selon la revendication 1, caractérisé par le fait que l'appareil de dosage d'éthène comprend une chambre réactionnelle qui comprend l'espace préréactionnel et l'espace réactionnel, le détecteur comprenant en outre des moyens optiques pour la détection d'un rayonnement électromagnétique provenant de l'espace réactionnel.

4. Appareil de dosage d'éthène selon l'une quelconque des revendications précédentes, caractérisé par le fait que le détecteur comprend des moyens pour détecter en alternance le rayonnement électromagnétique provenant de l'espace réactionnel et celui provenant de l'espace préréactionnel.

5. Appareil de dosage d'éthène selon l'une quelconque des revendications 1 à 3, caractérisé par le fait que l'appareil de dosage comprend un second détecteur pour la détection du rayonnement électromagnétique provenant de l'espace préréactionnel.

6. Appareil de dosage d'éthène selon la revendication 2, caractérisé par le fait qu'en cours d'utilisation, le débit d'ozone et le débit de gaz dans la chambre préréactionnelle sont assez élevés pour créer dans la chambre préréactionnelle des courants de turbulence permettant de mélanger l'ozone et le gaz l'un avec l'autre.

7. Appareil de dosage d'éthène selon l'une quelconque des revendications 2 à 6, caractérisé par le fait que l'appareil de dosage d'éthène est conçu de façon à ce que le temps de séjour du gaz dans la chambre préréactionnelle est tel que pratiquement la totalité de NO présent dans le gaz réagit avec l'ozone et que l'éthène présent dans le gaz ne réagit pratiquement pas avec l'ozone.

8. Appareil de dosage d'éthène selon la revendication 2, 6 ou 7, caractérisé par le fait que la chambre préréactionnelle est plus petite que la chambre réactionnelle.

9. Appareil de dosage d'éthène selon l'une quelconque des revendications précédentes, caractérisé par le fait que l'appareil de dosage d'éthène est conçu de façon à ce que, pendant l'utilisation, le mélange reste dans l'espace réactionnel au moins environ 100 à 1000 fois plus longtemps que dans l'espace préréactionnel.

10. Appareil de dosage d'éthène selon les revendications 8 à 9, caractérisé par le fait que la chambre préréactionnelle est au moins 1000 fois plus petite que la chambre réactionnelle.

11. Appareil de dosage d'éthène selon l'une quelconque des revendications précédentes, caractérisé par le fait que le détecteur comprend des moyens pour compenser un courant de décalage dans le détecteur.

12. Appareil de dosage d'éthène selon l'une quelconque des revendications précédentes, caractérisé par le fait que l'appareil -de dosage comprend au moins un filtre optique pour filtrer le rayonnement électromagnétique provenant de l'espace réactionnel avant que ce rayonnement n'arrive au détecteur.

13. Appareil de dosage d'éthène selon la revendication 12, caractérisé par le fait que le filtre laisse passer au moins substantiellement le rayonnement électromagnétique ayant une longueur d'onde correspondant à celle du rayonnement électromagnétique formé lors de la réaction entre l'ozone et l'éthène.

**14.** Appareil de dosage d'éthène selon la revendication 12 ou 13, caractérisé par le fait que le filtre arrête au moins un rayonnement électromagnétique ayant une longueur d'onde correspondant à celle du rayonnement électromagnétique formé par la réaction entre NO et l'ozone.

**15.** Appareil de dosage d'éthène selon l'une quelconque des revendications 2, 6, 7 ou 8, caractérisé par le fait que la chambre préréactionnelle a la forme d'une pièce en T.

**16.** Appareil de dosage d'éthène selon l'une quelconque des revendications précédentes, caractérisé par le fait que le générateur d'ozone forme une quantité d'ozone telle que la quantité d'ozone qui arrive dans l'espace préréactionnel est supérieure à la quantité d'éthène arrivant dans la chambre préréactionnelle.

**17.** Appareil de dosage d'éthène selon l'une quelconque des revendications précédentes, caractérisé par le fait que l'appareil de dosage d'éthène comprend en outre des moyens de refroidissement installés en amont de l'espace préréactionnel, destinés à refroidir le gaz.

**18.** Appareil de dosage d'éthène selon l'une quelconque des revendications précédentes, caractérisé par le fait que l'appareil de dosage d'éthène comprend en outre un dispositif de séchage de gaz, installé en amont de l'espace préréactionnel, destiné à extraire le H$_2$S du gaz.

**19.** Appareil de dosage selon l'une quelconque des revendications précédentes, caractérisé par le fait que l'appareil de dosage d'éthène comprend en outre un appareil Carbon Cicker, installé en amont de l'espace réactionnel, destiné à extraire les composés aromatiques et les hydrocarbures du gaz.

**20.** Procédé de détermination de la quantité d'éthène contenue dans un gaz, dans lequel le gaz et une quantité d'ozone en excès par rapport à la quantité d'éthène dans le gaz arrivent dans un espace réactionnel, et dans lequel le rayonnement électromagnétique formé dans l'espace réactionnel par une réaction chimique entre l'ozone et l'éthène est détecté permettant ainsi la mesure de la quantité d'éthène, caractérisé par le fait que le gaz et l'ozone sont d'abord réunis et mélangés avant d'arriver dans l'espace réactionnel, le mélange de gaz et d'ozone passant ensuite dans l'espace réactionnel où se fait la détermination de la quantité d'éthène sur la base du rayonnement électromagnétique provenant exclusivement de l'espace réactionnel.

**21.** Procédé selon la revendication 20, caractérisé par le fait que l'ozone et le gaz sont réunis dans une chambre préréactionnelle comprenant l'espace préréactionnel, le mélange passant ensuite de la chambre préréactionnelle dans l'espace réactionnel.

**22.** Procédé selon la revendication 20 ou 21, caractérisé par le fait que le débit d'ozone et le débit de gaz dans l'espace préréactionnel sont suffisamment élevés pour créer dans l'espace préréactionnel des courants de turbulence permettant de mélange l'ozone et le gaz l'un avec l'autre.

**23.** Procédé selon les revendications 20, 21 ou 22, caractérisé par le fait que le temps de séjour du gaz dans la chambre préréactionnelle est tel que pratiquement la totalité de NO présent dans le gaz réagit avec l'ozone et que l'éthène présent dans le gaz ne réagit pratiquement pas avec l'ozone.

**24.** Procédé selon l'une quelconque des revendications 20 à 23, caractérisé par le fait que le mélange reste dans l'espace réactionnel au moins environ 100 à 1000 fois plus longtemps que dans l'espace préréactionnel.

**25.** Procédé selon l'une quelconque des revendications 21 à 24, caractérisé par le fait que l'espace préréactionnel est plus petit que l'espace réactionnel.

**26.** Procédé selon les revendications 24 et 25, caractérisé par le fait que la chambre préréactionnelle est au moins environ 1000 fois plus petite que la chambre réactionnelle.

**27.** Procédé selon l'une quelconque des revendications 20 à 26, caractérisé par le fait qu'à la fois le rayonnement électromagnétique provenant de l'espace préréactionnel et le rayonnement électromagnétique provenant de l'espace réactionnel sont détectés séparément l'un de l'autre ce qui permet de mesurer respectivement la quantité de NO et la quantité d'éthène dans le gaz.

**28.** Procédé selon l'une quelconque des revendications 20 à 27, caractérisé par le fait que la quantité de rayonnement électromagnétique mesurée est compensée par un courant de décalage du détecteur.

**29.** Procédé selon l'une quelconque des revendications 20 à 28, caractérisé par le fait que le rayonnement électromagnétique provenant de l'espace réactionnel est filtré avant d'être détecté.

**30.** Procédé selon la revendication 29, caractérisé par le fait que le filtre laisse passer presque exclusivement un rayonnement électromagnétique ayant une longueur d'onde correspondant à la longueur d'onde du rayonnement électromagnétique formé par la réaction entre l'ozone et l'éthène.

31. Procédé selon la revendication 29 ou 30, caractérisé par le fait que l'on élimine par filtration au moins un rayonnement électromagnétique ayant une longueur d'onde correspondant à celle du rayonnement électromagnétique formé par la réaction entre l'ozone et NO.

32. Procédé selon l'une quelconque des revendications 20 à 31, caractérisé par le fait que le gaz est d'abord refroidi avant d'arriver dans l'espace préréactionnel.

33. Procédé selon l'une quelconque des revendications 20 à 32, caractérisé par le fait que le $H_2S$ est extrait du gaz avant que celui-ci n'arrive dans l'espace préréactionnel.

34. Procédé selon l'une quelconque des revendications 20 à 33, caractérisé par le fait que les composés aromatiques et les hydrocarbures sont extraits du gaz avant que celui-ci n'arrive dans l'espace préréactionnel.

46 44 42

40

33 34 36 38

24

28

30

18

26 58 48 32

20

22

12

54 52

4 14

16

50

8 6 10

2

gas

1

Fig. 1

Fig. 2

Fig. 3